# EUROPÄISCHE PATENTSCHRIFT

(11) **EP 0 854 250 B1**
(45) Veröffentlichungstag und Bekanntmachung des Hinweises auf die Patenterteilung: **14.11.2001**
(21) Anmeldenummer: 98100038.3
(22) Anmeldetag: 03.01.1998
(51) Int. Cl.: E04D 5/06, E04D 5/10, B32B 3/30, C08L 95/00

(54) **Stollenbahn für Dächer**
Roofing sheet with studs
Bande de toiture avec crampons

(30) Priorität: 17.01.1997 DE 29700748 U
(43) Veröffentlichungstag der Anmeldung: 22.07.1998
(73) Patentinhaber: Dr. Kohl GmbH & Cie Dachbelag- und Bautenschutzmittel-Fabrik, D-46282 Dorsten (DE)
(72) Erfinder: Hailer, Dieter, 40474 Düsseldorf (DE); Hörnig, Andreas Dr., 46284 Dorsten (DE)
(74) Vertreter: Spalthoff, Adolf, Dipl.-Ing.

(56) Entgegenhaltungen:
- EP-A- 0 090 489
- EP-A- 0 764 748
- GB-A- 2 040 797
- US-A- 4 091 135
- US-A- 4 612 152
- US-A- 5 565 532
- DATABASE WPI Section Ch, Week 8419 Derwent Publications Ltd., London, GB; Class A94, AN 84-116881 XP002055524 & JP 59 053 787 A (NITTO ELECTRIC IND CO) , 28.März 1984

## Beschreibung

Die Erfindung bezieht sich auf eine Stollenbahn für Dächer ud.dgl. nach dem Oberbegriff des Patentanspruchs 1.

Derartige Stollenbahnen werden häufig als Dampfdruck-Ausgleichbahnen mit einem zusammenhängenden Hohlraumsystem eingesetzt, um eine dauerhafte Dampfdruckausgleichschicht zu gewährleisten.

Aus der XP-002 055 524 ist ein Verfahren zur Herstellung bzw. zur Ausgestaltung der Hauptschicht einer Dachbahn bekannt, wobei diese Hauptschicht eine Klebefläche hat, die mit einer Abdeckschicht versehen wird. Diese Abdeckschicht bildet jedoch keinen Bestandteil der auf einem Dach verlegten Dachbahn, sondern sie wird vor der Verlegung der Dachbahn von der Hauptschicht der Dachbahn entfernt.

Die Abdeckschicht wird zunächst in eine Klebefläche oder Klebeschicht, die an der dem Dach zugewandten Unterfläche der Hauptschicht der Dachbahn vorgesehen ist, eingebracht. An ihrer der Hauptschicht der Dachbahn zugewandten Fläche hat die Abdeckschicht Prägevorsprünge. Diese Prägevorsprünge dringen in die Klebefläche der Hauptschicht ein, so daß mittels dieser Prägevorsprünge in der Klebefläche der Hauptschicht eine Struktur ausgebildet wird, die dazu führt, daß an der dem Dach zugewandten Unterseite der Hauptschicht ein Kanalsystem zum Dampfdruckausgleich gebildet wird. Vor der Verlegung der Hauptschicht auf einer Dachfläche wird die die Prägevorsprünge aufweisende Abdeckschicht von der Hauptschicht entfernt, wobei jedoch die durch die Prägevorsprünge in der Klebefläche der Hauptschicht der Dachbahn geschaffene Struktur Bestand hat. Wie bereits erwähnt, bildet die mit den Prägevorsprüngen versehene Abdeckschicht keinen Bestandteil der verlegten Dachbahn.

Bei der aus der XP-002 055 524 bekannten Dachbahn bestehen die mittels der Abdeckschicht hergestellten Strukturen aus dem die Klebefläche der Hauptschicht bildenden Klebstoff. Als Werkstoff für die Hauptschicht wird nicht vulkanisiertes Gummi oder eine Lage mit einem hohen Molekulargewicht angegeben.

Ausgehend von dem vorstehend geschilderten Stand der Technik liegt der Erfindung die Aufgabe zugrunde, eine Stollenbahn zur Abdichtung von Dächern zu schaffen, die besser an ein vorgebbares Anforderungsprofil anpaßbar ist, die eine erhöhte Alterungsbeständigkeit hat, deren Lagerfähigkeit verlängert ist, deren Gewichtsbelastbarkeit erhöht ist, deren Aufschweißzeiten verkürzt und deren Wärmestandfestigkeit und Kaltbiegeverhalten verbessert ist.

Diese Aufgabe wird erfindungsgemäß durch die Merkmale im kennzeichnenden Teil des Hauptanspruchs gelöst. Durch die zweilagige Ausgestaltung der Stollenbahn, d.h. durch die oberhalb der unteren Deckschicht vorgesehene obere Deckschicht der Stollenbahn, kann letztere an ihrer Unterseite entsprechend den dort gestellten Anforderungen und an ihrer Oberseite entsprechend den an der Oberfläche der Dachbahn gestellten Anforderungen, die sich wesentlich von denen an der Unterseite unterscheiden können, ausgestaltet werden. Darüber hinaus wird durch die werkstoffmäßige Ausgestaltung der unteren Deckschicht sowie der Stollen eine erhöhte Alterungsbeständigkeit, eine deutlich verlängerte Lagerfähigkeit, eine deutlich erhöhte Gewichtsbelastbarkeit, eine deutlich verkürzte Aufschweißzeit, eine verbesserte Wärmestandfestigkeit und ein verbessertes Kaltbiegeverhalten erreicht.

Sofern das mit dem Füllstoff stabilisierte Plastomerbitumen 50 bis 90, insbesondere 63,5 Gew. % Destillationsbitumen, vorzugsweise B 200, 10 bis 35 insbesondere 16 Gew. % APAO, vorzugsweise APP, 0,0 bis 5 insbesondere 0,5 Gew. % IPP und 0,0 bis 35 insbesondere 20 Gew. % Schiefermehl oder Kalksteinmehl oder ähnliche gebräuchliche Füllstoffe enthält, läßt sich beispielsweise bis zu Temperaturen von -8 Grad C das gewünschte Kaltbiegeverhalten der erfindungsgemäßen Stollenbahn gewährleisten, wobei diese Prüfung nach DIN 52 durchgeführt worden ist. Auch die Wärmestandfestigkeit der entsprechend ausgebildeten erfindungsgemäßen Stollenbahn, welche nach der gleichen Norm geprüft wurde, läßt sich bis zu einer Temperatur von ca. 155 Grad C gewährleisten. Beide Werte sind erheblich günstiger als bei den aus dem Stand der Technik bekannten Stollenbahnen.

Die Stollenbahn weist eine Trägereinlage in Form eines Glasvlieses oder eines Glasgewebes oder anderer für Dachbahnen an sich bekannter und üblicher Trägermaterialien auf. Die Trägereinlage ist mit einer Masse aus Bitumen oder Polymerbitumen, vorzugsweise mit Plastomerbitumen getränkt.

Die US-A-4 091 135 zeigt eine Dachbahn mit einem mehrschichtigen Aufbau. Die Dachbahn ist an ihrer Unterseite mehr oder weniger plan ausgebildet, so daß ein Dampfdruckausgleichssystem zwischen der Dachbahn und dem abzudeckenden Dach nicht entstehend kann. Von daher ergeben sich somit grundsätzliche Unterschiede hinsichtlich der an eine untere Deckschicht der Dachbahn zu stellenden statischen Anforderungen. Des weiteren handelt es sich bei den in der genannten Druckschrift aufgeführten Kunststoffen, die der Modifizierung von Bitumen dienen sollen, sämtlich um solche Kunststoffe, die der Klasse der Kautschuke bzw. der Klasse der Harze zuzuordnen sind, bei denen es sich um Werkstoffe mit elastomeren gummiartigen bzw. harzartigen und damit die Klebrigkeit erzeugenden Eigenschaften handelt.

Die US-A-4 612 152 (D1) beschreibt zwei unterschiedliche Stollenbahnen. In Spalte 1, Zeilen 26 bis 34, der genannten Druckschrift ist ein Bahnmaterial angegeben, welches zwei Schichten aus einem elastischen Kunststoff aufweist, wobei die untere der beiden Schichten als Schaumstoffschicht ausgebildet ist und an ihrer Unterseite ein Kanal- bzw. Nutsystem aufweist. In Spalte 2, Zeilen 35 bis 39, der genannten Druckschrift wird eine Dachbahn beschrieben, bei der eine Einlage mit einer Mischung aus Bitumen und einem Polymerbestandteil beschichtet und nach der Beschichtung mit einem Kanalsystem versehen wird. Hinsichtlich der letzteren Dachbahn wird in Spalte 3, Zeilen 32 bis 35, angegeben, daß nach der Verlegung der Dachbahn dieselbe mit einer Polymerschicht abgedeckt werden kann.

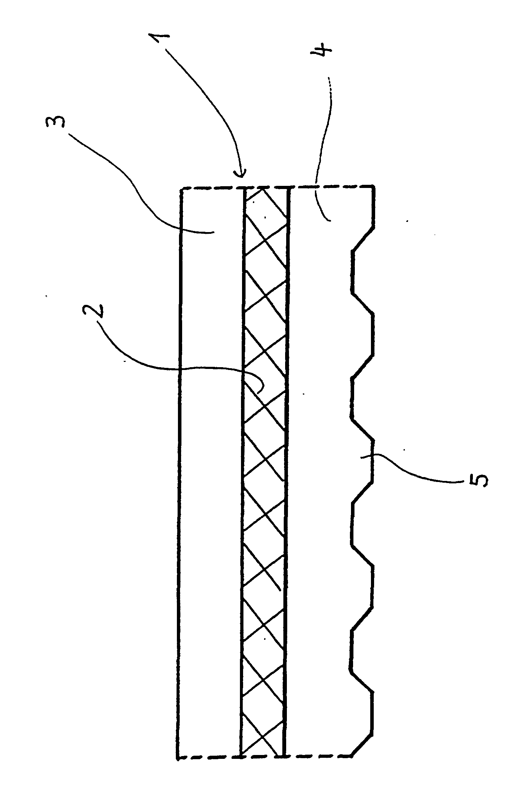

Im folgenden wird die Erfindung an Hand eines Ausführungsbeispiels unter Bezugnahme auf die Zeichnung näher erläutert, in der prinzipiell die hinsichtlich der vorliegenden Erfindung wesentlichen Bestandteile einer Stollenbahn dargestellt sind.

Die in der einzigen Figur hinsichtlich ihrer für die Erfindung wesentlichen Bestandteile dargestellte Stollenbahn 1 weist eine obere Deckschicht 3 und eine untere Deckschicht 4 auf. Zwischen den beiden Deckschichten 3, 4 ist aus Stabilitätsgründen eine Trägereinlage 2 eingelagert. Als Trägereinlage 2 dient vorzugsweise ein Glasgewebe mit 200 g/m2 gemäß DIN 18191-200. Alternativ kann auch eine Trägereinlage aus Polyestervlies, Glasvlies oder ein Verbundträger aus Polyester/Glas sowie dgl. für Dachbahnen übliche Materialien Verwendung finden.

Die Trägereinlage 2 wird außer bei der Verwendung dünner Glasvliese mit einer Masse aus Bitumen oder Polymerbitumen, vorzugsweise mit Plastomerbitumen, getränkt. Dieser Vorgang findet statt, bevor die Trägereinlage 2 mit der oberen und unteren Deckschicht 3, 4 versehen wird.

An ihrer Unterseite weist die untere Deckschicht 4 Vorsprünge in Form von nach unten vorragenden Stollen 5 auf, welche mit ihren freien Stirnflächen auf einem nicht weiter dargestellten Dach od.dgl. aufliegen und mit diesem durch Anflämmen verklebt werden. Die Zwischenräume zwischen den Stollen 5 bilden nach dem Einbau der Stollenbahn auf dem Dach od.dgl. ein zusammenhängendes Hohlraumsystem zwischen der Stollenbahn 1 und dem abzudichtenden Dach od.dgl. aus. Dieses Hohlraumsystem dient zum dauerhaften Ausgleich von durch eingeschlossene Feuchtigkeit auftretenden Dampfdrücken.

Die obere und die untere Deckschicht 3, 4 bestehen aus einem mit einem Füllstoff stabilisierten Plastomerbitumen. Als Bitumenanteil kann das Plastomerbitumen vorzugsweise 63,5 Gew. % Destillationsbitumen vorzugsweise B 200, als Polymerbestandteil vorzugsweise 16 Gew. % APAO vorzugsweise APP sowie 0,5 Gew. % IPP und 20 Gew. % Kalksteinmehl enthalten.

Die derart ausgestaltete Stollenbahn für Dächer od.dgl. weist eine im Vergleich zum Stand der Technik beträchtlich erhöhte Alterungsbeständigkeit, eine deutlich verlängerte Lagerfähigkeit, eine deutlich erhöhte Gewichtsbelastbarkeit, deutlich verkürzte Aufschweißzeiten sowie eine verbesserte Wärmestandfestigkeit und ein verbessertes Kaltbiegeverhalten auf.

Auf die obere Deckschicht 3 kann in herkömmlicher Weise eine Polymerfolie oder ein Polymervlies aufgebracht sein.

## Patentansprüche

1. Stollenbahn für Dächer ud.dgl., mit einer unteren Deckschicht (4), an deren Unterseite Stollen (5) ausgebildet sind, mittels denen zwischen der Stollenbahn (1) und dem abzudichtenden Dach od.dgl. ein einem allseitigen Dampfdruckausgleich dienendes zusammenhängendes Hohlraumsystem ausbildbar ist, **dadurch gekennzeichnet, daß** die Stollenbahn (1) eine oberhalb der unteren Deckschicht (4) angeordnete obere Deckschicht (3) aufweist, und daß die untere Deckschicht (4) sowie die Stollen (5) aus einem mit einem Füllstoff stabilisierten Plastomerbitumen ausgebildet sind, das als Bitumen ein Destillationsbitumen, als Polymerbestandteil eine möglichst harte APAO-Sorte und ggf. IPP und einen Füllstoff enthält.

2. Stollenbahn nach Anspruch 1, bei der das mit dem Füllstoff stabilisierte Plastomerbitumen 50 bis 90 Gew. % Destillationsbitumen, vorzugsweise B 200, 10 bis 35 Gew. % APAO, vorzugsweise APP, 0,0 bis 5 Gew. % IPP und 0 bis 35 Gew. % Füllstoffe, vorzugsweise Schiefermehl oder Kalksteinmehl, enthält.

3. Stollenbahn nach Anspruch 2, bei der das mit dem Füllstoff stabilisierte Plastomerbitumen
ca. 63,5 Gew. % Destillationsbitumen, vorzugsweise B 200,
ca. 16 Gew. % APAO, vorzugsweise APP,
ca. 0,5 Gew. % IPP und
ca. 20 Gew. % Füllstoffe, vorzugsweise Schiefermehl oder Kalksteinmehl,
enthält.

4. Stollenbahn nach einem der Ansprüche 1 bis 3, mit einer Trägereinlage (2) in Form eines Glasvlieses oder eines Glasgewebes oder anderer für Dachbahnen an sich bekannter und üblicher Trägermaterialien, wobei die Trägereinlage (2) mit einer Masse aus Bitumen oder Polymerbitumen getränkt ist.

5. Stollenbahn nach Anspruch 4, deren Trägereinlage (2) mit einer Masse aus Plastomerbitumen getränkt ist.

## Claims

1. Support course for roofs, and the like, having a lower outer layer (4), on the underside of which are formed supports (5), by means of which there can be formed, between the support course (1) and the roof, or the like, to be sealed, an interconnected cavity system, which acts as an all-round vapour pressure equalising system, **characterised in that** the support course (1) has an upper outer layer (3), which is arranged above the lower outer layer (4), and **in that** the lower outer layer (4) and the supports (5) are formed from a plastomer bitumen which is stabilised with a filler material and which contains a straight-run asphaltic bitumen as the bitumen, an APAO type, which is as hard as possible, as the polymer constituent and, optionally, IPP and a filler material.

2. Support course according to claim 1, wherein the plastomer bitumen, which is stabilised with the filler material, contains from 50 to 90% by weight straight-run asphaltic bitumen, preferably B 200, from 10 to 35% by weight APAO, preferably APP, from 0.0 to 5% by weight IPP and from 0 to 35% by weight filler materials, preferably ground slate or ground limestone.

3. Support course according to claim 2, wherein the plastomer bitumen, which is stabilised with the filler material, contains
approximately 63.5% by weight straight-run asphaltic bitumen, preferably B 200,
approximately 16% by weight APAO, preferably APP,
approximately 0.5% by weight IPP and
approximately 20% by weight filler materials, preferably ground slate or ground limestone.

4. Support course according to any one of claims 1 to 3, having a carrier insert (2) in the form of a glass-fibre fleece or a glass-fibre fabric or other carrier materials, which are conventional and known *per se* for roof courses, wherein the carrier insert (2) is impregnated with a measure of bitumen or polymer bitumen.

5. Support course according to claim 4, whose carrier insert (2) is impregnated with a measure of plastomer bitumen.

## Revendications

1. Bande à pastilles pour toiture et similaire, comportant une couche de couverture inférieure (4), sur la face inférieure de laquelle sont formées des pastilles (5), grâce auxquelles un réseau continu de cavités garantissant une égalisation de la pression de vapeur peut être formé entre la bande à pastilles (1) et le toit ou similaire à étancher, **caractérisée en ce que** la bande à pastilles (1) comporte une couche de couverture supérieure (3) qui est disposée au-dessus de la couche de couverture inférieure (4) et **en ce que** la couche de couverture inférieure (4) et les pastilles (5) sont formées d'un bitume plastomère stabilisé avec une charge, qui contient un bitume de distillation comme bitume, un polymère de type APAO très dur comme polymère et une charge.

2. Bande à pastilles selon la revendication 1, dans lequel le bitume plastomère stabilisé avec la charge contient 50 à 90 % en poids de bitume de distillation, de préférence B 200, 10 à 35 % en poids APAO, de préférence APP 0,0 à 5 % en poids et 0 à 35 % en poids de charges, de préférence poudre d'ardoise ou poudre de calcaire.

3. Bande à pastilles selon la revendication 2, dans lequel le bitume plastomère stabilisé avec la charge contient environ 63,5 % en poids de bitume de distillation, de préférence B 200, environ 16 % en poids APAO, de préférence APP, environ 0,5 % en poids IPP et environ 20 % en poids de charges, de préférence poudre d'ardoise ou poudre de calcaire.

4. Bande à pastilles selon une des revendications 1 à 3, avec une couche support (2) sous la forme d'un produit non-tissé de verre ou d'un tissu de verre ou en d'autres matériaux supports connus pour des bandes de toiture, la couche support (2) étant imprégnée avec une masse de bitume ou de bitume polymère.

5. Bande à pastilles selon la revendication 4, dans lequel la couche support (2) est imprégnée avec une masse de bitume plastomère.
